# EUROPEAN PATENT APPLICATION

(11) **EP 1 471 399 A2**
(43) Date of publication of application: **27.10.2004**
(21) Application number: 04252264.9
(22) Date of filing: 16.04.2004
(51) Int. Cl.: G05B 19/05

(54) **Sequence program editing apparatus**

(30) Priority: 21.04.2003 JP 2003115753
(71) Applicant: FANUC LTD, Minamitsuru-gun, Yamanashi 401-0597 (JP)
(72) Inventor: Inoue, Michiya, Hachioji-shi Tokyo 192-0023 (JP); Maeda, Kimio, Hachioji-shi Tokyo 192-0354 (JP); Yamaki, Junichi Fanuc Dai3virakaramatsu, Minamitsuru-gun Yamanashi 401-0511 (JP); Yamamoto, Kiharu, R. 14-405 Fanuc Manshonharimomi, Minamitsuru-gun Yamanashi 401-0511 (JP)
(74) Representative: Billington, Lawrence Emlyn

(57) **Abstract**

A sequence program editing apparatus capable of easily replacing duplicated signal names. The apparatus detects duplicated signal names used in a sequence program and displays locations used with the signal names in the form of a list. Names to be rewritten are selected from among the duplicates and checked. New signal names are directly entered, and a signal name rewriting execution command is inputted. Alternatively, a search range and a sort of assignable signal name are designated by setting start and end addresses. When an execution command is inputted, signal names of designated sort are automatically extracted and entered as new names. The subsequent input of a signal name rewriting execution command automatically replaces the duplicated signal names in the designated locations with signal names newly entered. It is possible to easily replace duplication of the same signal names. If a range of renaming contacts associated with the coils is set, the contacts are renamed.

## Description

### BACKGROUND OF THE INVENTION

### 1. Field of the Invention

The present invention relates to a sequence program editing apparatus for creating and editing a sequence program for use in a sequence controller such as a programmable controller.

### 2. Description of Related Art

For creating a sequence program by means of a sequence program editing apparatus, an operator first operates display/input means to display a sequence program creation/edit window on a display screen of a display device of the display/input means. The operator then designates locations for inputting functional devices, such as contacts and coils, on the display screen by using a keyboard or a mouse of the display/input means and inputs symbols (sorts) of the functional devices in the designated locations using symbol keys of the keyboard. Subsequently, the operator sets signal names for the functional devices by operating the keyboard. When setting the signal names, the operator displays a list of signal names in the form of a window on the screen of the display device, and assigns signal names to the functional devices in a ladder diagram (sequence program) in creation referring to the list to thereby create and edit the sequence program.

There has been developed a sequence program editing apparatus capable of inputting and displaying subsidiary data in addition to symbols and signal names of the devices in the process of creating and editing the sequence program (JP 5-313708A).

Since a large number of signal names are used in the sequence program, there is a possibility that, at the time of entering the signal names, the same signal name is assigned to different coils by mistake. For this reason, after creating the sequence program, the operator has to search whether or not there is any duplicated signal name referring to the name list and the ladder diagram.

There is known a programming device of a programmable logic controller for executing a sequence program by allocating a plurality of tasks having different cycles, in which if there exists a duplicate writing of bit data for the same address in the multiple-cycle tasks in the sequence program, the task number, the program unit number, and the address and bit location of the bit data to be written are displayed (JP 2002-358102A).

As described, a sequence program in which the same signal name is assigned to different coils has to be modified. In this case, it is necessary for an operator to confirm unused signal names (and addresses therefor) and enter these signal names to the duplicated signal names. Such modification work, however, requires a considerable amount of time and labor.

### SUMMARY OF THE INVENTION

The present invention provides a sequence program editing apparatus capable of easily rewriting duplicated signal names assigned for different coils in a sequence program.

A sequence program editing apparatus of the present invention comprises: program storage means storing a sequence program; duplication detecting means for detecting duplication of the same signal name assigned for different coils in the sequence program stored in the program storage device; display means for displaying duplicated signal names detected by the duplication detecting means and locations of the duplicated signal names in the sequence program; and signal-name rewriting means for rewriting the duplicated signal names displayed by the display means to eliminate the duplication of the same signal name assigned for the different coils.

The sequence program editing apparatus may further comprise selection means for allowing selection of signal names to be rewritten in the duplicated signal names displayed in the display means.

The signal-name rewriting means may include means for rename contacts for the coils to which the same signal name is assigned, and renaming-range setting means for setting a range of renaming the contacts in the sequence program.

The renaming-range setting means may allow to set the renaming range for a divided unit of a main program and subprograms of the sequence program.

The signal-name rewriting means may comprise search-range setting means for setting a search range of signal names assignable to the different coils, extracting means for extracting signal names assignable to the different coils within the set search range, and rewriting means for rewriting the duplicated signal names to the extracted signal names.

The sequence program editing apparatus may further comprise communication means for communication with a programmable controller, and the duplication detecting means may detect duplication of the same signal name assigned for different coils in a sequence program stored in the programmable controller.

### BRIEF DESCRIPTION OF THE DRAWINGS

FIG. 1 is a functional block diagram of a first embodiment of the present invention;
FIG. 2 is a block diagram showing a substantial part of a sequence program editing apparatus of the first embodiment;
FIG. 3 is a flowchart of rewriting process of duplicated signal names in the first embodiment;
FIG. 4 is an explanatory view of a display screen showing a list of duplicated signal names in the first embodiment;
FIG. 5 is an explanatory view of a display screen showing a list of signal name rewriting range designation in the first embodiment; and
FIG. 6 is a functional block diagram of a second embodiment of the present invention.

### DETAILED DESCRIPTION

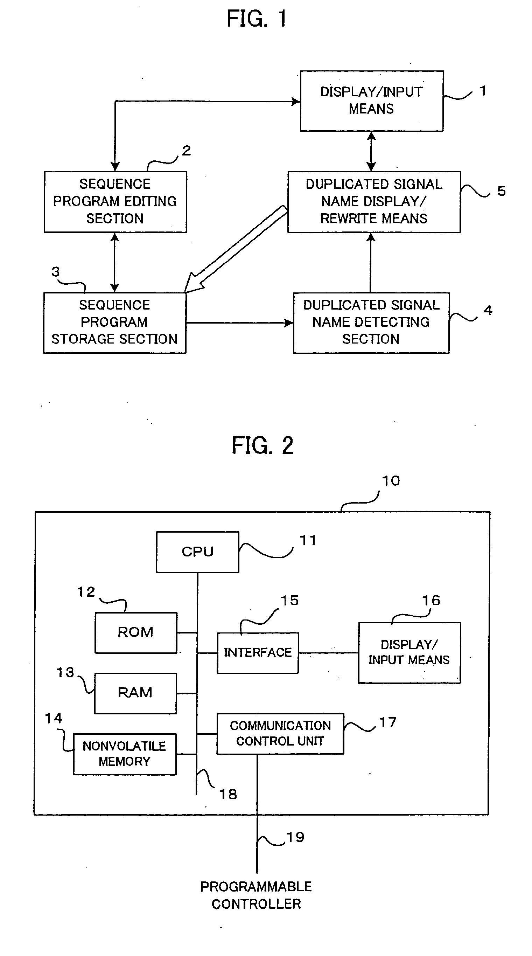

FIG. 1 is a functional block diagram of a first embodiment of the present invention. An operator operates a keyboard or a mouse of display/input means 1 to display a sequence program creating/editing window on a display screen of a display device of the display/input means 1. Positions for inputting functional devices such as contacts and coils are designated by way of the keyboard or the mouse of the display/input means 1. Symbols (sorts) of the functional devices such as contacts and coils are then inputted to the designated positions by operating symbol keys of the keyboard. Subsequently, signal names are assigned for the functional devices using the keyboard.

Based on the inputted data, a sequence program editing section 2 creates and edits a sequence program, and the obtained program is stored in a sequence program storage section 3. A duplicated signal name detecting section 4 detects duplicated signal names present in the sequence program which is stored in the sequence program storage section 3 and displays the duplicated signal names in the form of a list of duplicated signal names in the display device. Then, the duplicated signal names in the sequence program stored in the sequence program storage section 3 are rewritten to designated different signal names by using duplicated signal name display/rewrite means 5.

FIG. 2 is a block diagram of a principal part of a sequence program editing apparatus 10 according to the present embodiment. Connected through a bus 18 to a processor (CPU) 11 are a ROM 12, a RAM 13, a nonvolatile memory (RAM) 14, an interface 15 and a communication control unit 17. The processor 11 controls the sequence program editing apparatus 10, based on a system program which is stored in the ROM 12. The RAM 13 is utilized for temporary storage of data and the like, and the nonvolatile memory (RAM) 14 stores a created sequence program.

Connected to the interface 15 is display/input means 16 comprising a display device composed of a CRT, liquid crystal and the like, and input means composed of a keyboard, mouse, etc. The keyboard disposed in the display/input means 16 is provided with keys for inputting symbols (sorts) of devices, such as contacts and coils, that are displayed in ladder diagrams of the sequence program. The communication control unit 17 is connected to a communication network 19, such as RS-232C and Ethernet (Registered trademark).

The above-described configuration is identical to that of a conventional sequence program editing apparatus, and there is no disparity therebetween. A difference is that the configuration of the first embodiment includes an after-mentioned process of changing duplicated signal names or the like in sequence program edit software stored in the ROM 12.

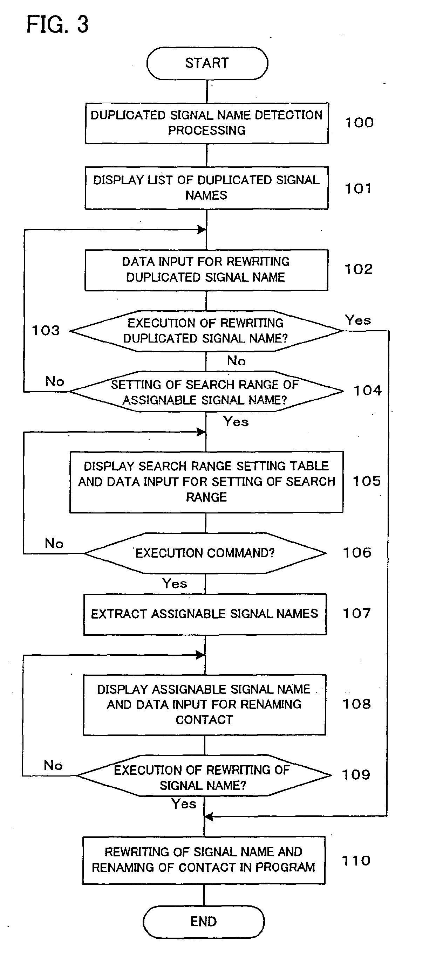

FIG. 3 is a flowchart of the name-changing process for changing duplicated signal names. As mentioned above, if a command to implement the duplicated signal name-changing process is inputted after the sequence program is created and edited by using the display/input means 16 to be stored in the nonvolatile memory 14, the processor 11 starts the process shown in FIG. 3.

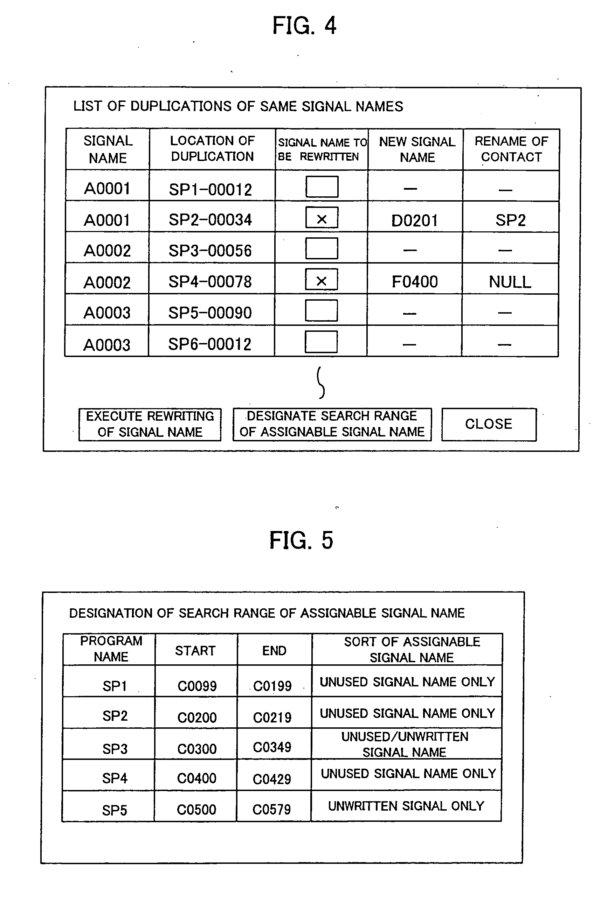

First, the sequence program stored in the nonvolatile memory 14 is read out to perform a duplicated signal name detection processing (Step 100). Duplicated signal names and locations thereof in the program are found and displayed on the display screen of the display device of the display/input means 16 in the form of a list of duplicated signal names as shown in FIG. 4 (Step 101).

In the list of duplicated signal names, duplicated signal names are displayed in a "signal name" column, while locations in the program, where the signal names are indicated, are displayed in a "location of duplication" column, as shown in FIG. 4. Further displayed are a column containing check boxes for checking as to whether or not the signal name is selected to be rewritten, a column for new signal name to be newly assigned, and a "rename of contact" column for setting a range for renaming contact for the coil to which the same signal name is assigned. There are also displayed an "execute rewriting of signal name" button, a "designate search range of assignable signal name" button and a "close" button.

The example shown in FIG. 4 indicates that the same signal names of "A0001", "A0002" and "A0003" are assigned to different coils, respectively. The locations of the duplicated signal names are indicated in terms of program names given to respective program split units, such as a main program and subprograms, and in terms of orders assigned from the first in each program unit. For example, the list shows that the signal name "A0041" is written into a "00012"th location in the program unit of the program named SP1 and at the same time into a "00034"th location in the program unit of the program named SP2. Likewise, the other duplicated signal names are displayed with program names and program locations in which the signal names are written.

Referring to the list of duplicated signal names thus displayed, the operator inputs data for executing the signal name rewrite processing (Step 102). The present embodiment offers two methods as signal name-changing methods. One of the methods includes the step of selecting signal names to be rewritten and then entering new names and a range of the contact renaming by means of the keyboard, whereas the other includes the step of automatically selecting new signal names to be replaced with duplicates (hereinafter simply referred to as "new signal names") from among unused names and then entering the same.

First, the first method will be described below. The operator selects signal names to be rewritten. More specifically, the operator selects a signal name to be rewritten between the duplicated signal names and checks the check box located next to the writing location of the selected signal name to be rewritten, by using a mouse or cursor (the example shown in FIG. 4 indicates that the signal name "A0001" located in "SP2-00034" is selected between the two "A0001"s, and that the signal name "A0002" located in "SP4-00078" is selected between the two "A0002"s). New signal names are then entered into a "New signal name" column using the keyboard. When it is necessary to rename the contact in addition to the rewriting of the above-mentioned signal names, a program name is inputted into the "rename of contact" column as a range of the contact renaming (Step 102).

In this case, new signal names may be entered directly by the operator. Alternatively, however, the operator may display the unused or unwritten signal names and select new signal names therefrom to enter the same.

In the example shown in FIG. 4, a new signal name "D0201" is entered into the location of the second "A0001" which has been selected to be rewritten, and the program name "SP2" is entered as a range of renaming the contact. Likewise, a new signal name "F0400" is entered into the location of the second "A0002" which is the selected signal name, and "NULL" is entered into the corresponding part in the "rename of contact" column.

In the above-described manner, signal names to be rewritten are selected, and new signal names substitute for the duplicated signal names are entered. If necessary, the operator inputs the range in which the contacts are renamed, and clicks the "execute rewriting of signal name" button (Step 103). The procedure proceeds to Step 110, and the signal names of the selected program locations in the sequence program stored in the nonvolatile memory 14 are replaced with those newly entered. In addition, if the contacts are intended to be renamed, and the range of contact renaming is therefore determined, the names of the contacts in the determined range are also rewritten, thereby editing the sequence program.

These steps are carried out when the operator manually designates the signal names to be assigned.

Next, the second method will be explained. The operator checks the check box of the "signal name to be rewritten" column (Step 102), and clicks the "designate search range of assignable signal names" button (Step 104). Thus, a search range setting table for setting a search range of assignable signal name, as shown in FIG. 5, is displayed on the display screen of the display/input means 16 in the form of a window. The search range setting table includes a "program name" column for names of programs in which signal names are to be rewritten, a column for addresses (signal name) from which a search for the rewriting is started, a column for addresses (signal names) at which the search is ended, and a "sort of assignable signal name" column for sorts of new signal names. Program names corresponding to the programs whose signal names are to be rewritten, that have been checked in the corresponding check boxes of the list of duplicated signal names shown in FIG. 4, are automatically selected and displayed in the "new signal name" column.

In order to rewrite the signal names with respect to the programs displayed, the operator enters the addresses (signal names) from which the search is started and those at which the search is ended in corresponding input columns. The addresses (signal names) from which the search is started and those at which the search is ended may be first addresses (signal names) and final addresses (signal names) provided to the corresponding programs, respectively. In this case, these signal names may be automatically determined and displayed beforehand. If the range, in which the replacement of signal names is carried out, is clear, the operator enters the first addresses (signal names) and the final addresses (signal names) to set the search range.

Furthermore, the sorts of new signal names are entered. The sorts of new signal names are each determined by selecting and setting one sort among three, namely "unused signal name", "unwritten signal name", and "unused and unwritten signal name" (Step 105).

When an execution command is inputted using a return key or the like of the keyboard of the display/input means 16 (Step 106), the processor 11 starts processing for extracting assignable signal names (Step 107).

The process of extracting signal names to be rewritten includes the step of conducting the search from the first address (signal name) through the final address (signal name) which have been determined and inputted, and judging whether the signal name is of the sort which has been set in the "sorts of assignable signal names" column during the programming. For example, if the sort of a new signal name is defined as "unused signal" in the "sorts of assignable signals" column, the search is conducted from the first address (signal name), and if an unused signal name is found, the unused signal name is written and displayed in the "new signal name" column in the list of duplicated signal names as a new signal name. If necessary, the renaming range (program name) is inputted in the "rename of contact" column in the list of duplicated signal names as described above (Step 108).

In this way, the new signal names and the renaming range of contacts are inputted with respect to the signal names that have been checked in the corresponding check boxes of the "signal name to be rewritten" column, and the "execute rewriting of signal name" button is clicked (Step 109). By doing so, the designated name between the duplicated signal names of the sequence program is replaced with the signal name which is newly entered. Furthermore, if the renaming range is set, the names of the contacts are also changed (Step 110). In other words, if the signal names whose check boxes have been checked are replaced with the new signal names entered. In cases where the range of renaming the contacts is set, the names of the contacts are changed at the same time, making it possible to obtain the sequence program containing no duplicated signal names.

As described above, in the present embodiment, duplicated signal names are displayed, and new signal names substitute therefor are entered, thereby automatically changing the signal names and automatically attaining a sequence program containing no duplicated signal names.

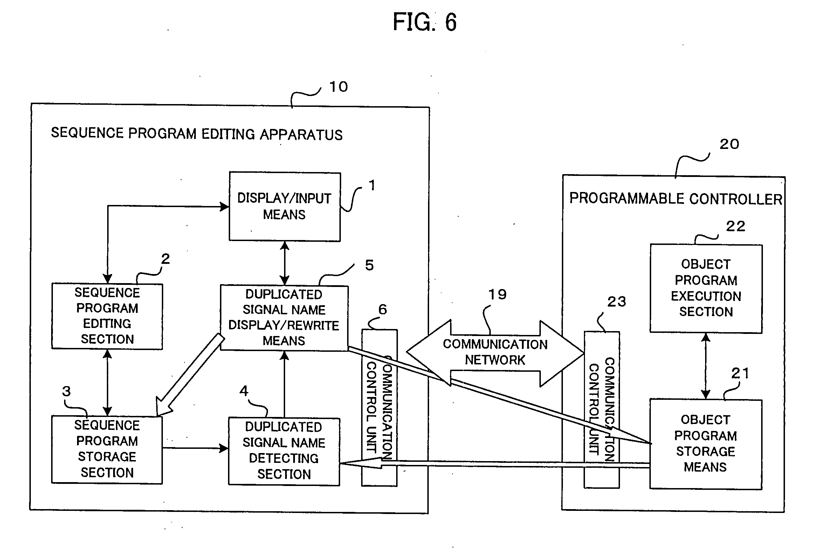

FIG. 6 is a functional block diagram of a second embodiment of the present invention. The first embodiment described above is designed to rewrite duplicated signal names of the sequence program stored in the sequence program editing apparatus 10. The second embodiment, however, is designed to rewrite duplicated signal names with respect to the sequence program stored in a programmable controller 20 which is connected to the sequence program editing apparatus 10 via the communication network 19.

In respect of the sequence program editing apparatus 10, the second embodiment is different from the first one shown in FIG. 1 only in that the second embodiment is added with a communication control unit 6. The sequence program editing apparatus 10 is connected to the programmable controller 20 through a line, such as the communication network 19. The apparatus 10 reads out the sequence program stored in object program storage means 21 of the programmable controller 20 through a communication control unit 23 disposed in the programmable controller 20 and the communication network 19. As mentioned in the descriptions about the first embodiment, duplicated signal names are searched and displayed together with the locations thereof in the display/input means 1 in the form of a list of duplicated signal names. The subsequent process is similar to the first embodiment.

The duplicated signal names are replaced with new signal names, and the sequence program is stored in the object program storage means 21 through the communication control unit 6, the communication network 19 and the communication control unit 23. The stored sequence program is compiled and converted into an execution format to be executed in an object program execution section 22.

The present invention is capable of easily performing rewriting of signal names in a sequence program in which duplicated signal names are used, and reducing labor and time required for creation and editing of the sequence program.

## Claims

1. A sequence program editing apparatus comprising:
program storage means storing a sequence program;
duplication detecting means for detecting duplication of the same signal name assigned for different coils in the sequence program stored in said program storage device;
display means for displaying duplicated signal names detected by said duplication detecting means and locations of the duplicated signal names in the sequence program; and
signal-name rewriting means for rewriting the duplicated signal names displayed by the display means to eliminate the duplication of the same signal name assigned for the different coils.

2. A sequence program editing apparatus according to claim 1, further comprising selection means for allowing selection of signal names to be rewritten in the duplicated signal names displayed in said display means.

3. A sequence program editing apparatus according to claim 1, wherein said signal-name rewriting means includes means for rename contacts for the coils to which the same signal name is assigned, and renaming-range setting means for setting a range of renaming the contacts in the sequence program.

4. A sequence program editing apparatus according to claim 3, wherein said renaming-range setting means allows to set the renaming range for a divided unit of a main program and subprograms of the sequence program.

5. A sequence program editing apparatus according to claim 1, wherein said signal-name rewriting means comprises search-range setting means for setting a search range of signal names assignable to the different coils, extracting means for extracting signal names assignable to the different coils within the set search range, and rewriting means for rewriting the duplicated signal names to the extracted signal names.

6. A sequence program editing apparatus according to claim 1, further comprising communication means for communication with a programmable controller, wherein said duplication detecting means detects duplication of the same signal name assigned for different coils in a sequence program stored in the programmable controller.
